Europäisches Patentamt

European Patent Office

Office européen des brevets

(19)

(11) Veröffentlichungsnummer : **0 377 400 B1**

# (12) EUROPÄISCHE PATENTSCHRIFT

(45) Veröffentlichungstag der Patentschrift :
23.09.92 Patentblatt 92/39

(51) Int. Cl.⁵ : **B65G 57/00, B65D 57/00**

(21) Anmeldenummer : **89730223.8**

(22) Anmeldetag : **20.12.89**

(54) **Palettiersystem.**

(30) Priorität : **31.12.88 DE 3844504**

(43) Veröffentlichungstag der Anmeldung :
**11.07.90 Patentblatt 90/28**

(45) Bekanntmachung des Hinweises auf die
Patenterteilung :
**23.09.92 Patentblatt 92/39**

(84) Benannte Vertragsstaaten :
**AT BE CH DE ES FR GB GR IT LI NL SE**

(56) Entgegenhaltungen :
**EP-A- 0 296 346**

(56) Entgegenhaltungen :
**DE-A- 2 446 464**
**FR-A- 2 305 363**
**FR-A- 2 453 084**
**GB-A- 2 205 300**

(73) Patentinhaber : **SYSTEM GMBH**
**Monschauer Strasse 1**
**W-4000 Düsseldorf 11 (DE)**

(72) Erfinder : **Tübke, Axel, B., Dipl.-Kfm.Dr.**
**Bayernallee 19**
**W-1000 Berlin 19 (DE)**

(74) Vertreter : **Christiansen, Henning, Dipl.-Ing.**
**Patentanwalt Pacelliallee 43/45**
**W-1000 Berlin 33 (DE)**

## Beschreibung

Die Erfindung betrifft ein einen Palettierroboter aufweisendes Palettiersystem der im Oberbegriff des Anspruchs 1 angegebenen Art.

Ein derartiger Palettierroboter zum Versetzen von stapelbaren Gegenständen ist aus der DE 31 02 431 A1 bekannt.

Der bekannte Roboter entspricht in seinem Aufbau einem Industrieroboter, der mit einer Zusatzvorrichtung zum Ergreifen von Packen versehen ist. Er ist als Standgerät ausgebildet und weist einen um einen zentralen Fuß schwenkbaren Arm auf, an dessen Ende die Greifvorrichtung befestigt ist.

Nachteilig ist dabei, daß der bekannte Palettierrobotor nur ein Palettieren zuläßt, da mit dem Greifer Stapel von einer Palette nicht ohne weiteres aufgenommen werden können. Ein Depalettieren hingegen ist mit diesem Gerät ohne weitere Vorrichtungen oder zusätzliche Mittel nicht möglich.

Aus der DE 36 13 462 A1 ist eine Vorrichtung zum Be- und Entladen eines Stapellifts mit einer Brett-Transportvorrichtung bekannt. Das Brett dient dabei als Unterlage für Folienstapel und weist von der Seite nach innen weisende Aussparungen für eine Greifvorrichtung auf, wobei das Brett seitlich vom Gehäuse der Vorrichtung getragen wird.

Diese Art der Unterlage ist aber als Zwischenlage nicht geeignet, da zum einen das Brett durch seine vollwandige Ausbildung ein viel zu großes Gewicht aufweist, so daß die palettierten Stapel an ihren Erhebungen einseitig belastet und somit beschädigt werden. Zum anderen ist ein Brett bekanntermaßen unflexibel und paßt sich nicht den toleranzbedingten unterschiedlichen Höhen der Stapel an. Eine stabile Stapelung ist deshalb, insbesondere bei Folienstapeln, nicht möglich.

Aus der DE 24 46 464 Al ist eine Vorrichtung zum Auflegen von Zwischenlagen auf Spanplatten, die zu einem Plattenpaket aufeinander gestapelt werden, bekannt. Hierbei werden die Zwischenlagen, die aus einer Platte mit an ihrer Oberseite angeordneten, parallel und im Abstand voneinander verlaufenden Balken ausgebildet sind, mittels einer in horizontaler Richtung bewegbaren Greifvorrichtung in einer Auflegestation auf das Plattenpaket abgesetzt, um dann zusammen mit dem darunter liegenden Plattenpaket von einem Gabelstapler zum Lagerort transportiert zu werden. Wenn das Plattenpaket wieder benötigt wird, wird das Plattenpaket zusammen mit der oben aufliegenden Zwischenlage vom Gabelstapler zu einer Entfernungsstation transportiert, in der die Zwischenlage von der Greifvorrichtung wieder aufgegriffen wird. Diese Zwischenlage kann dann zur Auflegestation geführt werden, um erneut auf ein Plattenpaket abgesetzt zu werden.

Diese Zwischenlage ist aber wiederum als Zwischenlage für Folienstapel nicht geeignet, da sie, bedingt durch ihre Ausbildung, von einem zu großen Gewicht und zu unflexibel ist.

Der Erfindung liegt die Aufgabe zugrunde, bei einem System der eingangs genannten Gattung sowohl ein Palettieren als auch ein Depalettieren von Folienstapeln zu ermöglichen.

Diese Aufgabe wird mit den kennzeichnenden Merkmalen des Anspruchs 1 gelöst.

Die Erfindung beruht auf der Erkenntnis, daß durch Zwischenlagen als Merkmale des erfindungsgemäßem Systems ein Zugriffsbereich für eine vollautomatische Greifvorrichtung zur Verfügung steht, aus dem der Greifer stets unter Zurücklassung der Zwischenlage die zu depalettierenden Stapel entnehmen kann. Die Zwischenlagen sind wiederverwendbar und werden nach dem Abräumen einer Stapellage jeweils insgesamt mittels einer Saugvorrichtung oder einer sonstigen Transportvorrichtung - vorteilhafterweise auch durch das Greifsystem selbst - entnommen. Beim Palettieren wird entsprechend nach dem Erzeugen einer Stapellage vor dem Beginn der neuen Lage eine derartige Zwischenlage programmiert/automatisch eingefügt.

Wenn die Erhebungen entsprechend einer bevorzugten Weiterbildung in Form von Wellen und/oder Noppen ausgebildet sind, ist der Zugriff des Greifers von zwei oder mehr Seiten möglich, wobei der Greifer vorteilhafterweise insgesamt um eine vertikale Achse schwenkbar ausgebildet ist. Dabei ist es insbesondere günstig, daß die noppenförmigen Erhebungen in der Ebene der Zwischenlage bezüglich zwei senkrecht aufeinanderstehender Achsenrichtungen in übereinstimmender Abstandsfolge angeordnet sind.

Bevorzugt wellenförmig ausgildete Erhebungen der Zwischenlagen werden vor dem Flachpressen infolge der Belastung weitgehend bewahrt, wenn die Wellen an ihrer Unterseite als Zugstreifen ausgebildete Verbindungselemente aufweisen, die jeweils zwei benachbarte Wellentäler miteinander verbinden.

Insbesondere wiederverwendbare Zwischenlagen lassen sich vorteilhaft dann raumsparend transportieren und lagern, wenn die Anordnung der maximalen Erhebungen an der Oberseite der Zwischenlagen der Anordnung von Ausnehmungen an deren Unterseite entspricht, so daß die Zwischenlagen stapelbar sind. Diese sind dabei aus einem Folienmaterial mit im wesentlichen konstanter Dicke hergestellt, welches vorteilhafterweise auch derart flexibel ist, daß die Zwischenlagen aufroll- und/oder schneidbar sind.

Ein Ergreifen der sich jeweils über die vollständige Palettenfläche erstreckenden Zwischenlage ist erleichtert, wenn die Oberfläche der Zwischenlagen derart glatt ausgebildet ist, daß diese mittels Sauger transportierbar sind.

Die Zwischenlage kann in bevorzugter Weiterbildung zur Steuerung des Palettier- bzw. Depalettiervorgangs selbst dienen, wenn sie eine Codierung aufweist, die mittels einer am Greifer vorgesehenen Lesevorrichtung abtastbar ist. Auf diese Weise enthält die Zwischenlage die Anweisung für ein bestimmtes Palettierschema, das für die Steuerung des oder der Greifer sowohl bei der Palettierung als auch bei der Depalettierung zur Verfügung steht, ohne daß es einer individuellen Steuerung oder Programmierung bedarf. Auf vorgegebenen Wegen des Warenflusses bleiben mit den Zwischenlagen somit auch die Informationen über Art und Lagerung der Stapel erhalten. Eine derartige Codierung ist bevorzugt im Bereich der Kanten der Zwischenlagen angeordnet.

Die Steuercodes werden dabei insbesondere in einen Speicher der Steuervorrichtung für den Greifer übertragen, wobei der Speicher derart vorgesehen ist, daß er Steuercodes für ein Schema für die Anordnung der stapelbaren Gegenstände auf den Paletten aufweist, wobei Adressiermittel für den Speicher vorgesehen sind und Ausgangssignale der Lesemittel für die Codierung den Adressiermitteln als Eingangssignale zwecks Auswahl der zu einem Schema gehörigen Steuercodes zugeführt werden und die Steuercodes zu den Eingängen der Steuerung für einen Greifer zum Versetzen der stapelbaren Gegenstände gelangen.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1a ein erstes Ausführungsbeispiel der Erfindung in Seitenansicht,

Figur 1b das Ausführungsbeispiel gemäß Figur 1a in Draufsicht,

Figur 2 einen Greifer als Detail des Ausführungsbeispiels gemäß Figuren 1a und 1b in perspektivischer Darstellung,

Figur 3a Zwischenlagen für zu palettierendes Gut als Detail im Schnitt,

Figur 3b die Zwischenlagen gemäß Figur 3a in der Draufsicht,

Figur 4a den Greiferbereich des Ausführungsbeispiels gemäß Figur 1a in der Grundposition,

Figur 4b den Greiferbereich gemäß Figur 4a in einer geneigten Position zur Aufnahme oder zum Ablegen eines Stapels sowie

Figur 5 ein Blockschaltbild einer Steuerschaltung für das Ausführungsbeispiel gemäß Figur 1a.

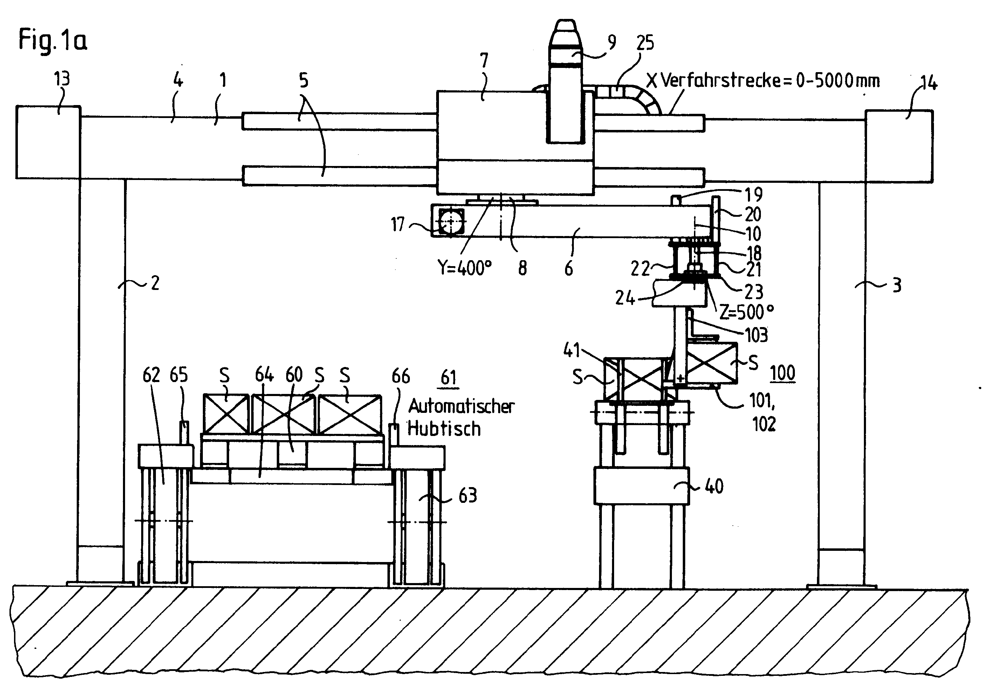

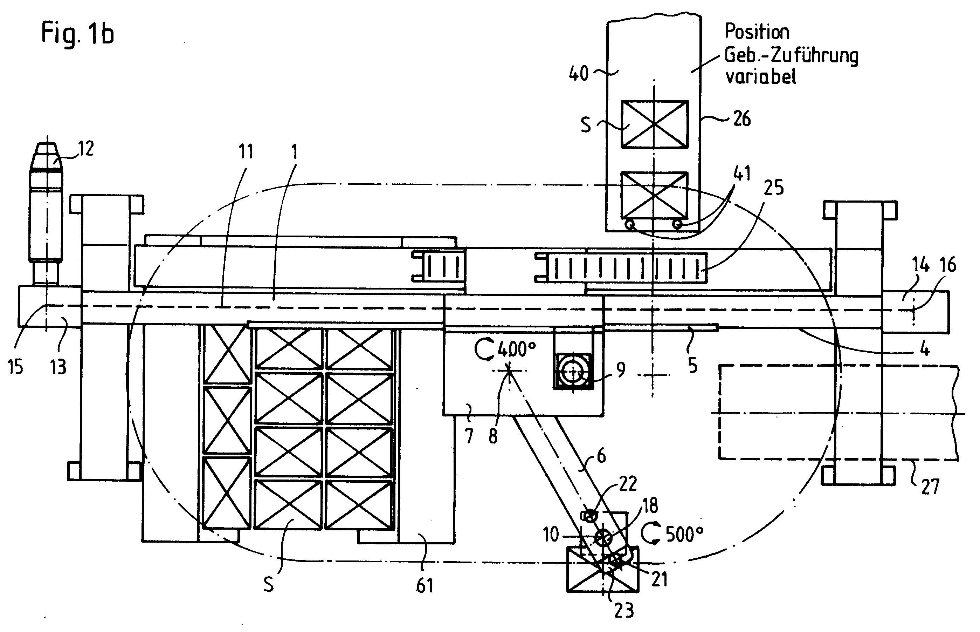

Bei dem in den Figuren 1a und b in der Seitenansicht bzw. in der Draufsicht dargestellten bevorzugten Ausführungsbeispiel der Erfindung erstreckt sich eine Traverse 1 über den Arbeitsbereich. An ihren Enden ist sie mit zwei Auflagern 2 und 3 in Form von Ständern verbunden, wobei die Auflager 2 und 3 mindestens die Höhe des notwendigen Bearbeitungsraumes aufweisen.

An einer Seite 4 der Traverse 1 ist eine Fahrbahn 5 angeordnet, die die Länge des seitlichen Verfahrweges eines Arms 6 aufweist. Mittels einer Führungsvorrichtung 7 ist der an einer Drehvorrichtung 8, mit einem möglichen Drehwinkel von 400°, aufgehängte Arm 6 in Richtung der Traverse 1 verschieblich gelagert. Der Antrieb der Drehvorrichtung 8 erfolgt elektrisch durch einen Motor 9, der mit einem Gehäuse der Führungsvorrichtung 7 verschraubt ist.

Den Antrieb für eine Verschiebebewegung in Richtung der Traverse 1 erhält die Führungsvorrichtung 7 über einen in der Zeichnung nicht sichtbaren, aber in Figur 1b strichliniert angedeuten, Zahnriemen 11 von einem Motor 12. Der Zahnriemen 11, der innerhalb der Traverse 1 verläuft, spannt sich von dem einen Antriebsgehäuse 13, an dem der Motor 12 angeordnet ist, bis zu einem Antriebsgehäuse 14, das am gegenüberliegenden Ende der Traverse 1 mit dieser verbunden ist. Der Zahnriemen 11 ist über ein Zahnrad 15 beim Motor 12 zur Führungsvorrichtung 7 geführt. Hier ist der Zahnriemen 11 mit der Führungsvorrichtung 7 derart verbunden, daß sich mit dem Bewegen des Zahnriemens 11 die Führungsvorrichtung 7 gleichzeitig mitbewegt. Im Anschluß an die Führungsvorrichtung 7 verläuft der Zahnriemen 11 über eine hier nicht sichtbare Umlenkrolle 16, die im Antriebsgehäuse 14 gelagert ist, zurück zum Motor 12.

Der Arm 6 ist an seinem freien Ende mit einer Drehvorrichtung 10 versehen, an der eine Greifvorrichtung 100 angebracht ist. Der Antrieb der Drehvorrichtung 10 erfolgt mit einem Motor 17, der an der der Drehvorrichtung 10 gegenüberliegenden Seite des Arms angebracht ist, wobei die Kraftübertragung von dem Motor 17 auf die Drehvorrichtung 10 über einen weiteren Zahnriemen erfolgt. Die Kraft wird dann weiter von der Drehvorrichtung 10 über eine Welle 18 auf die Greifvorrichtung 100 übertragen, wobei die Welle 18 um einen vorgegebenen Hub in senkrechter Richtung verschiebbar ist.

In der Nachbarschaft zur Welle 18 sind zwei den zwei Druckluftzylindern 19 und 20 zugeordnete Hubstangen 21 und 22 angeordnet. Die Druckluftzylinder 19 und 20 sind in paralleler Anordnung mit dem freien Ende des Armes 6 verbunden und die Hubstangen sind in Richtung der Greifvorrichtung 100 verfahrbar. An dem den Druckzylindern 19 und 20 gegenüberliegenden Enden der Hubstangen 21 und 22 ist eine Hubplatte 23 angeordnet, die mit einer Anschlußvorrichtung 24 der Greifvorrichtung 100 mit der Welle 18 verbunden ist. Der maximale Hub ist durch die Differenz der eingerückten Stellung und der maximal ausfahrbaren Stellung der Hubstangen 19 und 20 vorgegeben.

Die Führungsvorrichtung 7, der Motor 9 und der Motor 17, sowie die Bewegungsvorrichtungen für den Greifer 100 sind durch einen Kabelstrang mit der Steuervorrichtung verknüpft, wobei der Kabelstrang in der Traverse in einer gegliederten Leiste 25 geführt ist.

Durch die wenigen Gelenke im Palettierroboter ist die Palettierungsgeschwindigkeit unter Wahrung eines großen Zugriffsbereichs hoch. Der Arm 6 ist starr ausgebildet und besteht bevorzugt aus einem kastenförmigen Alumiumprofil.

Die um eine vertikale Achse rotierende einzige Drehvorrichtung 8 des starren Arms 6 ermöglicht zusammen mit der horizontalen Führungsvorrichtung 7 des drehgelagerten Endes des Arms 6 ein schnelles und präzises Bewegen des Arms 6 mit der Greifvorrichtung 100 in einem großen Arbeitsbereich. Zum Ausgleich der unterschiedlichen, durch Verwerfungen oder durch Toleranzen der Stapelhöhen enstehenden Ablage- bzw. Aufnahmeflächen beim Palettieren bzw. Depalettieren, ist die Greifvorrichtung 100 um den vertikalen Hub von wenigen Zentimetern verschieblich durch die vertikal gerichteten Hubstangen 21 und 22 ausgebildet. Die Hubstangen 21 und 22 bilden eine einfache vertikale Hilfsführung der Greifvorrichtung 100, wobei die vertikale Ausgleichsbewegung der Greifvorrichtung 100 die hohe Palettierungsgeschwindigkeit, aufgrund des geringen Bewegungsumfangs, nicht beeinträchtigt.

In den Figuren 1a und b ist ein Längsförderer 40 dargestellt, der einen Druckerzeugnisstapel S antransportiert und der an seinem Ende eine Anschlagvorrichtung 41 aufweist. Er ist im Schwenkbereich des Arms 6 angeordnet. Vom Ende des Längsförderers 40 wird der Stapel S von der Greifvorrichtung 100 aufgenommen. Dabei fahren die unteren ersten Zinken 101 und 102 in die in dem Längsförderer vorgesehenen Ausnehmungen unter dem an der Anschlagvorrichtung angeordneten Stapel S. Die unteren beiden ersten Zinken 101 und 102 drücken gleichzeitig mit dem zweiten Zinken 103, der in Form eines Preßbackens ausgebildet ist, den Stapel S zusammen. Anschließend verfahren die Druckzylinder 19 und 20 die Hubstangen 21 und 22 soweit nach oben, bis die Höhe der Anschlagvorrichtung 41 überwunden ist. Bei dem Stapel S kann es sich bei dem dargestellten Ausführungsbeispiel um lose oder verbundene Stapel von Zeitschriften oder um Sammelhefter handeln.

Der Stapel wird nun mit einer koordinierten Bewegung der Führungsvorrichtung 7, der Drehvorrichtung 8, des Arms 6, der Drehvorrichtung 10, der Greifvorrichtung 100 und der Hubstangen 21 und 22 in Richtung auf eine Palette 60 bewegt, die auf einem vertikal um die gewünschte Stapelhöhe verfahrbaren Hubtisch 61 angeordnet ist. Der Hubtisch 61 ist dabei innerhalb des maximalen Verfahr- und/oder Drehbereiches des Palettieroboters angeordnet.

Der Hubtisch 61 weist eine zwischen Ständern 62 und 63 vertikal bewegliche Platte 64 auf, die eine Palette 60 trägt, auf der sich wiederum Stapel S befinden. Mit den Ständern verbunden ist ein Lichtsender 65 und ein Lichtempfänger 66 einer Lichtschranke, deren Lichtstrahl den Hubtisch in der Höhe des Zugriffsbereichs der unteren, ersten Zinken des Greifers überquert. Der Lichtstrahl ist zwischen mehreren Umlenkpunkten gespiegelt bzw. so geführt, daß er den gesamten Bereich der Palette mit einem maximalen Strahlabstand erfaßt, der kleiner ist als die kleinste Querabmessung eines zu erfassenden Stapels. Ist eine Lage abgeräumt, d.h. wenn alle Fördervorgänge für ein Palettierungsmuster ausgeführt sind, hebt sich der Tisch durch das von der Lichtschranke abgegebene Signal wegen des nun freien Lichtwegs um eine Stapelhöhe. Beim Palettieren senkt sich nach dem Beladen einer Ebene entsprechend dem Palettierungsmuster die Platte 64 bis der Lichtweg wieder frei ist.

Wie in Figur 1b dargestellt ist, sind zwei mögliche Positionen 26 und 27 des Längsförderers vorgegeben. Die Palettierung erfolgt nach einem vorgegebenen Schema, das der Roboter nacheinander abfährt und die Stapel an den vorgegebenen Plätzen ablegt, wobei der Hubtisch 61 immer dann nach unten, um die Höhe eines Stapels S, verfährt, wenn eine Lage mit Stapeln S auf die Palette 60 aufgebracht wurde. Der Vorgang wiederholt sich so oft, bis eine gewünschte Höhe der Palettenbeladung erreicht ist. Anschließend senkt sich der Hubtisch vollends ab und setzt die Palette auf ein hier nicht eingezeichnetes FTS (Fahrerloses Transport System) ab. Das FTS fährt die Palette aus dem Bearbeitungsraum heraus und ein weiteres FTS fährt eine unbeladene Palette 60 in den Hubtisch 61 hinein und dieser Transportvorgang als Teil der sogenannten "Palettierung" erfolgt von Neuem.

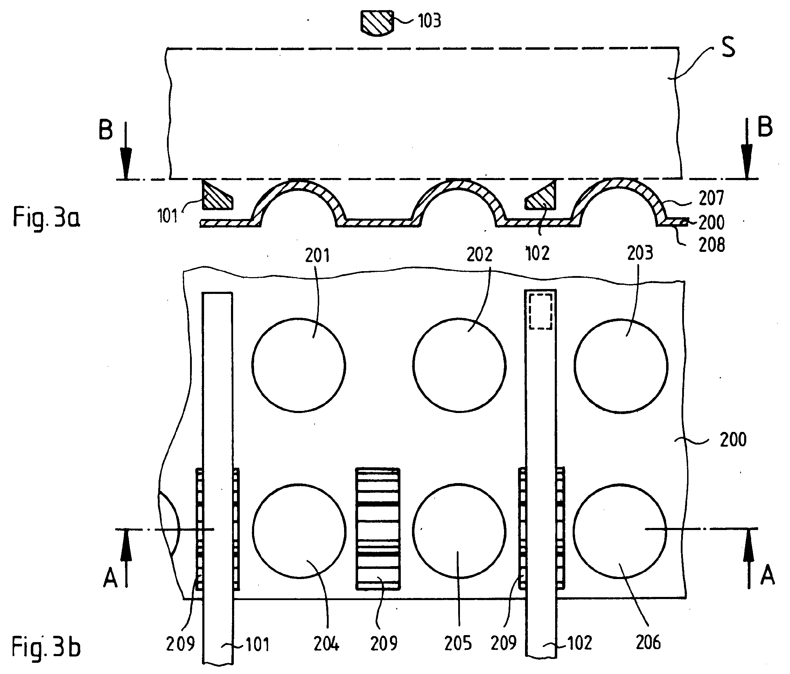

Ebenso kann der Ablauf auch umgekehrt, im Zuge einer Depalettierung erfolgen, so daß die Stapel S von der Palette 60 auf den Längsförderer 40 bewegt werden. Voraussetzung für das Ergreifen von gestapeltem Gut sind aber Zwischenlagen 200, die anhand von Figur 3a und b beschrieben sind.

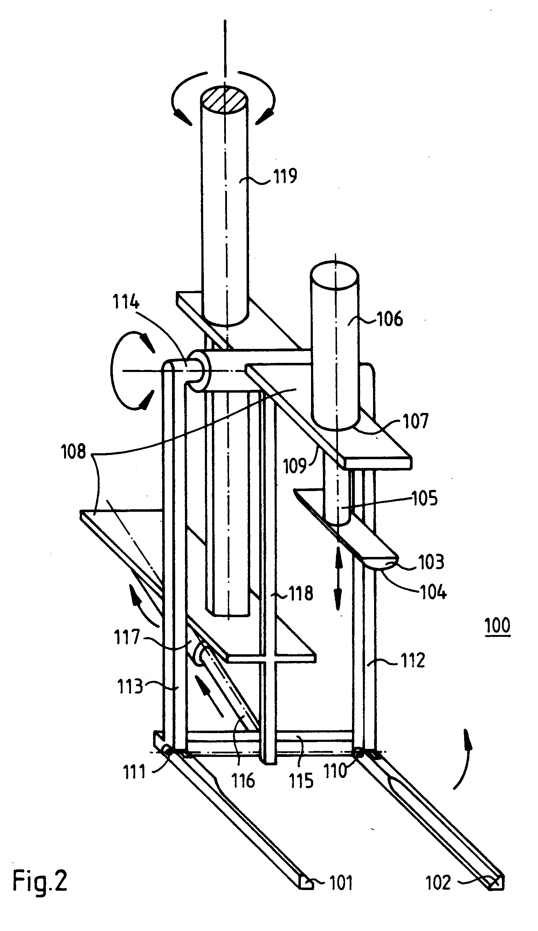

Bei der in Figur 2 perspektivisch dargestellten Greifvorrichtung des bevorzugten Ausführungsbeispiels sind zwei erste Zinken 101 und 102 in einem festen Abstand angeordnet und ein ein Gegenelement bildender zweiter Zinken 103, in Bezug auf die gegenüberliegenden ersten Zinken 101 und 102, in einer Bewegungsebenbene verschieblich, die mittig zwischen den beiden ersten Zinken 101 und 102 liegt.

Der zweite Zinken 103 ist in Form eines Preßbackens derart ausgebildet, daß seine Auflagefläche 104 eine konvexe Wölbung in Richtung der ersten Zinken 101 und 102 aufweist. Der zweite Zinken 103 ist an der der Auflagefläche gegenüberliegenden Seite mit einer Zug/Druckstange 105 verbunden, die in einem Druckzylinder 106 verschieblich endet. Der Druckzylinder 106 ist in einer Aussparung 107 im Greifergehäuse 108 angeordnet und mit einem Greifergehäuse 108 derart verbunden, daß seine hier nicht sichtbare Stirnfläche mit der in Richtung auf den zweiten Zinken 103 zeigenden Fläche 109 des Greifergehäuses bündig abschließt.

Die beiden ersten Zinken 101 und 102 sind in Form von Greiferleisten ausgebildet, wobei sie seitlich an einander zugewandten Flächen in ihrem oberen Bereich abgeschrägt sind. Der Neigungswinkel der Abschrägung ist in Anpassung an das zu palettierende Gut unterschiedlich ausgebildet. Die Zinken 101 und 102 sind beginnend beim Scharniergelenk in Richtung auf das freie Ende und von der Greiferleistenfläche, die zum zweiten Zinken zeigt, in Richtung auf die gegenüberliegende Greiferleistenfläche, abgeschrägt. Die beiden ersten Zinken 101 und 102 sind mit Scharniergelenken 110 und 111 mit den Enden von parallel zueinander angeordneten Gabelstangen 112 und 113 verbunden. Die Scharniergelenke 110 und 111 sind eingeschränkt klappbar ausgebildet, so daß die beiden ersten Zinken 101 und 102 nur in Richtung des zweiten Zinkens 103 klappbar sind. Die Gabelstangen 112 und 113 sind an ihrem anderen Ende durch eine quer zu den Gabelstangen 112 und 113 verlaufende Lagerstange 114 miteinander verbunden, die in dem Greifergehäuse 108 scharnierartig gelagert ist. Auf der den ersten Zinken 101 und 102 gegenüberliegenden Seite, in Fortsetzung der Scharniergelenke 110 und 111 der beiden ersten Zinken 101 und 102, ist eine Querstrebe 115 mit den Gabelstangen 112 und 113 verbunden. In der Mitte der Querstrebe 115 ist an einem drehbaren, hier nicht sichtbaren Gelenk eine Hubstange 116 angeordnet. Sie verläuft in Richtung auf einen am Greifergehäuse 108 angeordneten Druckzylinder 117 und endet darin verschieblich. Der Druckzylinder 117 ist an einem hier nicht sichtbaren Gelenk drehbar am Greifergehäuse 108 aufgehängt.

Zwischen den beiden Gabelstangen 112 und 113 befindet sich ein Abstreifer 118, der parallel zur Bewegungsachse des zweiten Zinken 103 angeordnet ist und senkrecht zur Ebene, die die beiden ersten Zinken 101 und 102 in nicht gekipptem Zustand einnehmen, steht.

Das Greifergehäuse 108 hat eine Anschlußstange 119 an der eine in der Zeichnung verdeckte Kupplung für einen Palettierroboter angebracht ist. Unterhalb der Kupplung, in Richtung auf das Greifergehäuse 108, weist die Anschlußstange 119 eine hier nicht sichtbare Drehvorrichtung in Bezug auf eine vertikale Achse, die mittig in der Anschlußstange angeordnet ist, auf. Ebenso unterhalb der Kupplung weist die Anschlußstange 119 eine hier nicht sichtbare Klappvorrichtung in Bezug auf eine horizontale Achse unterhalb der Drehvorrichtung auf. Dadurch kann die Greifvorrichtung um mindestens 360° gedreht und in, gegen und seitlich zur Richtung der freien Enden der Zinken 101 bis 103 geklappt werden. Die Anschlußstange 119 ist auf der Seite des Greifergehäuses angeordnet, an der sich auch der Druckzylinder 106 befindet und liegt in der Ebene, die der zweite Zinken 103 bei seiner Bewegung durchläuft.

In der Darstellung gemäß Figur 2 sind die Bewegungsachsen des Greifers erkennbar. Dabei führt das Greifen oder Lösen des Greifers und damit das Aufnehmen und Ablegen von Stapeln zu folgendem Bewegungsablauf. Der Greifer wird vom Roboter derart zu dem zu greifenden Stapel gefahren, daß die beiden ersten Greiferzinken 101 und 102 unter dem Stapel und der Greiferzinken 103 über dem Stapel angeordnet sind. Der Stapel liegt dann auch beim Abstreifer 118 an und gleichzeitig mittig in Bezug auf die beiden ersten Zinken 101 und 102 und dem zweiten Zinken 103.

Anschließend wird die Greifvorrichtung insgesamt angehoben und gleichzeitig der zweite Zinken mit der doppelten Geschwindigkeit des Hubs der Greifvorrichtung in Richtung der beiden ersten Zinken 101 und 102 gedrückt. Dadurch ergreifen die Zinken 101 bis 103 gleichzeitig den Stapel. Mit Erreichen eines vorgegebenen Greifdrucks und einer vorgegebenen den Stapel stabilisierenden Wölbung wird die Greifvorrichtung durch einen Roboter und/oder eine Fördervorrichtung an den Ablegeort gefahren.

Die Greifvorrichtung wird nun durch das in der Zeichnung nicht sichtbare Drehgelenk an der Anschlußstange 119 in die gewünschte Ablegerichtung gedreht und durch eine ebenfalls über die Anschlußstange 119 übertragene Senkbewegung auf eine vorgegebene Ablagehöhe, die sich unmittelbar über der Zwischenlage 200 befindet, gefahren. Die Gabelstangen 112 und 113 werden nun über die Querstange 115 und über die Hubstange 116, die in den Druckzylinder einfährt, vom Stapel weg in die entgegengesetzte Richtung um die Achse der Lagerstange 114 gekippt. Dadurch kann die Stapelunterseite sich vollständig am Stapelort absetzen. Um beim Zurückkippen der Gabelstangen 112 und 113 ein Beschädigen der Zwischenlagen durch die beiden ersten Greiferzinken 101 und 102 zu verhindern, klappen die beiden ersten Greiferzinken 101 und 102 um die Drehachse, die durch die scharnierartigen Gelenke 110 und 111 geht, aufwärts.

Die Greifvorrichtung kann den Stapel auch umgekehrt aufnehmen, so daß die Greifvorrichtung um eine Achse so gedreht ist, daß die beiden ersten Zinken 101 und 102 über und der zweite Zinken unter dem Stapel angeordnet ist.

In den Figuren 3a und b ist in einem Querschnitt A-A und einer Draufsicht eine Zwischenlage des erfindungsgemäßen Ausführungsbeispiels dargestellt. Die Zwischenlage 200 erstreckt sich jeweils über eine gesamte Palette und bildet eine Unterlage, welche einen Zugriff des Greifers zum Depalettieren der einzelnen Stapel ermöglicht. Nach dem Abräumen einer gesamten Lage wird die Zwischenlage entfernt. Sie ist wiederverwendbar und weist insbesondere die für den Zugriff des Greifers notwendigen Informationen, insbesondere über das Palettierungsmuster auf, so daß eine Depalettierung automatisch erfolgen kann, wenn die betreffende Information gelesen wurde, ohne daß der Roboter die Positionen der einzelnen Stapel erkennen muß. Die Codierungen der Zwischenlagen geben andererseits auch bei der Palettierung die Palettierungsmuster vor, so daß auch hier keine weiteren Steuermaßnahmen erforderlich sind. Für jedes Palettierungsmuster ist lediglich eine besondere, die entsprechenden Codierungen aufweisende, Sorte von Zwischenlagen erforderlich.

Die Zwischenlage weist Erhebungen 201 bis 206 auf, wobei die Erhebungen 201 bis 206 in Form von Noppen ausgebildet sind, in deren Zwischenräume die Greiferzinken von den vier Seitenkanten her einfahren können. Der Abstand und die Höhe der Noppen ist auf die Greiferzinken abgestimmt. Den Noppen 201 bis 206 an der Oberseite 207 sind Vertiefungen der Unterseite 208 zugeordnet, so daß die Zwischenlagen stapelbar und ineinanderfügbar sind. Die Oberfläche ist glatt ausgebildet, so daß die Zwischenlagen mittels Sauger transportierbar sind. An der Oberseite 207 der Zwischenlagen 200 sind Strichcodierungen 209 mittig zwischen den Noppen angeordnet sind. Die Codierungen enthalten Informationen über die Position der Greifvorrichtung 100 und den Palettier- und Depalettierungsablauf und werden von einer Lesevorrichtung, die unterhalb der Greiferleiste 102 angeordnet ist, beim Einfahren erfaßt. Bei in Richtung der Greiferbewegung lesbaren Strichcodes sind zusätzliche Antriebsmittel zur Erzeugung der Relativbewegung zwischen Codierung und Abtastvorrichtung entbehrlich.

Für den Depalettiervorgang von Stapeln sind die Zwischenlagen Voraussetzung. Die Greifvorrichtung 100 wird mit seinen Zinken 101 bis 103 derart an den Stapel gefahren, daß die beiden ersten Zinken 101 und 102 unter dem Stapel und jeweils mittig zwischen den Noppen angeordnet sind und der zweite Zinken 103 sich über dem Stapel befindet. Gleichzeitig befindet sich der Stapel mittig zwischen den beiden ersten Zinken 101 und 102 und dem zweiten Zinken 103. Die ersten Zinken untergreifen den zu depalettierenden Stapel S und können sich aus der Zwischenlage frei nach oben entfernen. Die Zwischenlage verbleibt auf der Unterlage und wird nach dem Abräumen einer Stapellage entfernt. (Der Transportvorgang insgesamt verläuft dem anhand von Figur 1 beschriebenen Palettiervorgang entsprechend, beginnend mit der Stapelaufnahme bis zur Stapelablage.)

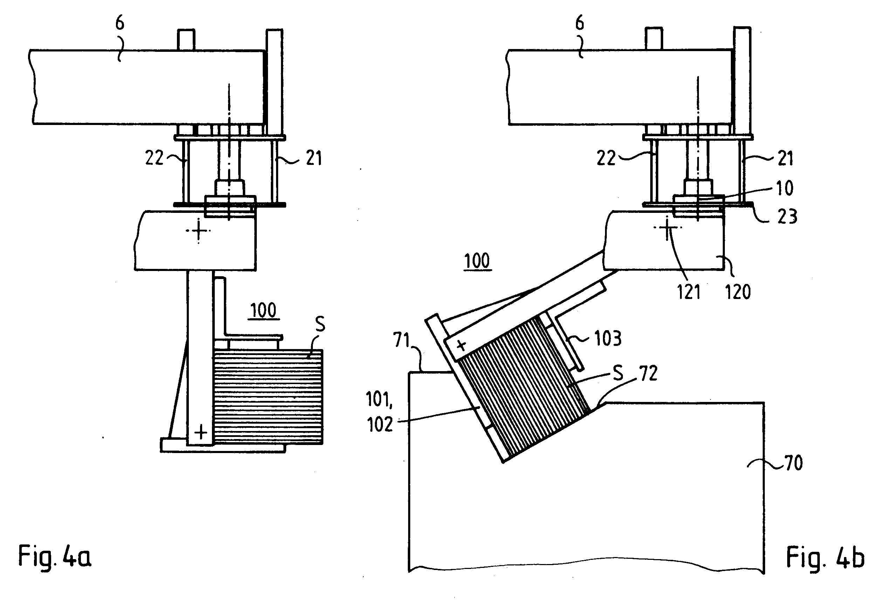

Der Palettier- und der Depalettiervorgang wurde anhand von Figur 1 zwischen einem Längsförderer 40 und einer Palette 60 dargestellt. Der Palettierroboter kann aber auch weitere Stapelaufnahme- und Stapelablagepositionen von unterschiedlichen Verarbeitungsmaschinen bedienen. Ferner kann er in die unterschiedlichen Fertigungs-, Binde- und Versandstraßen integriert werden. Eine derartige bevorzugte Möglichkeit soll nachstehend anhand der Figuren 4a und b näher erläutert werden. Der erfindungsgemäße Palettierroboter beschickt bzw. entsorgt hier einen schematisch dargestellten Sammelhefter 70. Der Stapel wird von einer hier nicht sichtbaren Palette 60, die Zwischenlagen 200 zwischen den Stapellagen aufweist, in der anhand von Figur 1, 2 und 3 beschriebenen Art der Stapelaufnahme von dem Greiferzinken 101 bis 103 aufgenommen und gemäß Figur 4a in einer koordinierten Bewegung der Führungsvorrichtung 7, Drehvorrichtung 8, des Arms 6 und der Drehvorrichtung 10 zum Sammelhefter 70 gefahren.

Die Stapel sind im Sammelhefter in einer gegenüber der Horizontalen geneigten Position angeordnet worden. Die Hubstangen 21 und 22 verfahren die Greifvorrichtung 100, um den Betrag den die Sammelhefteroberseite 71 höher liegt als die Stapellagenoberseite auf der Palette 60, in Richtung Hubplatte 23. Die Greifvorrichtung 100 ist in einer Klappvorrichtung 120 gelagert, so daß die Greifvorrichtung 100 um eine horizontal verlaufende Achse 121 schwenkbar ist. Die Greifvorrichtung 100 wird gleichzeitig mit der Hubbewegung der Hubstangen 21 und 22 um die horizontal verlaufende Achse 121 in Richtung der den freien Enden der Zinken gegenüberliegenden Seiten in den Neigungswinkel der Ablage gedreht. Anschließend senken die Hubstangen 21 und 22 die Greifvorrichtung 100 in Richtung auf den Sammelhefter soweit ab, bis der Stapel auf der geneigten Sammelhefteroberseite 72 aufliegt. Dann lösen sich die Greiferzinken 101 bis 103 in der anhand von Figur 1 beschriebenen Art der Stapelablage.

Die in den Figuren 4a und b schematisch dargestellte Sammelhefter bildet lediglich ein Beispiel eines Ablage-oder Aufnahmeorts für zu transportierende Stapel. Die Zufuhr in die oder die Abfuhr aus der dargestellten geneigten Position kann bevorzugt auch in aufgefächerter Form erfolgen. Der betreffende Ablage- oder Aufnahmeort wird bevorzugt auch durch einen sogenannten Kreuzleger oder eine Anpreßstation gebildet.

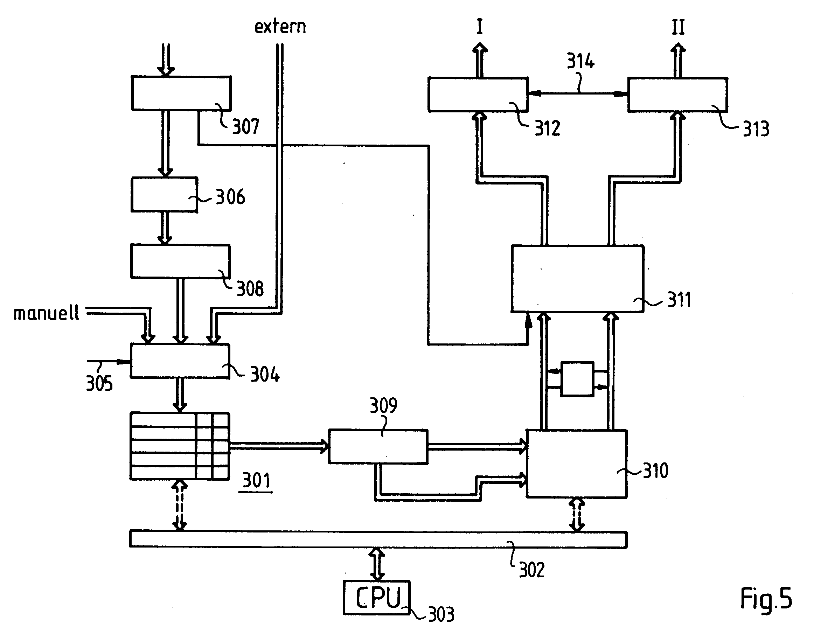

In Figur 5 ist die Steuerung des erfindungsgemäßen Palettierroboters im Blockschaltbild wiedergegeben.

In einem Programmspeicher 301 sind Anweisungen für vollständige Palettierungs- bzw. Depalettierungsvorgänge als Folge von Transportbefehlen abgespeichert. Jeder anwählbare Speicherbereich enthält eine Folge von Transportbefehlen, die bei Anwahl des entsprechenden Speicherbereichs der Reihe nach abgearbeitet werden. Diese Befehle enthalten zugeordnete Informationen, die mit der Auswahl der Befehle zum Zugriff freigegeben werden. Diese Informationen betreffen die Ausführungszeit des betreffenden Transportbefehls und bei Systemen, bei denen mehrere Greiferarme zur Ausführung desselben Transportauftrags herangezogen werden können, eine Zuordnungskennung, welche den betreffenden Transportbefehl definitiv einem Greiferarm zuweist, oder die Ausführung mehreren oder allen Greiferarmen freistellt, so daß durch Aufgabentausch eine Geschwindigkeitsoptimierung erzielbar ist. Die einzelnen Bereiche für die Befehlssequenzen sind im Blockbild des Speichers 301 symbolisch durch Kästchen dargestellt, wobei jeder der vertikal übereinander als Rechteck dargestellten Befehlssequenz in horizontaler Folge die zugeordneten Informationen (kleine Quadrate) zugefügt sind. Jede für sich adressierbare Befehlssequenz besteht aber physikalisch aus einer Folge von Befehlen, denen die betreffenden Informationen einzeln zugeordnet sind.

Jede Befehlssequenz ist damit auch einem Palettierungsschema zugeordnet, daß durch die Folge der Transportanweisungen Aufschluß gibt über die Verteilung des Ladeguts auf der Palette, sowohl beim Palettieren als auch beim Depalettieren. Auf diese Weise kann - unabhängig von der Größe und Anzahl der zu ladenden Stapel - stets eine gleichmäßige Packung erzielt werden, die insbesondere an die Ränder der Paletten angrenzt, so daß ein stabiler Stapel erzeugt wird. Das entsprechende gilt für die Warenzufuhr-oder Entnahme in Produktions- und Lagerbereichen.

Der Speicher 301 ist in einem Mikroprozessor oder sonstigem Computersystem über einen Bus 302 mit einer CPU 303 verbunden. Durch die CPU werden die nachfolgend zu beschreibenden Datenübertragungen ausgeführt. Die entsprechenden Verbindungswege sind in Figur 5 der Übersichtlichkeit halber direkt dargestellt. Bei einem speicherprogrammierbaren System wird der betreffende Datenaustausch aber ebenfalls durch die CPU 303 über den Bus 302 veranlaßt.

Die Adressierung des Speichers erfolgt über einen Auswahlschalter 304, der mit verschiedenen Eingängen versehen ist, die über ein Betätigungselement 305 manuell wählbar sind. Hierbei ist zunächst eine manuelle Adresseneingabe möglich (linker Eingangskanal), um durch direkte Schaltbetätigung Palettierungsmuster für die Depalettierung oder Palettierung vorzugeben. Über den rechten Eingangskanal ist entsprechend eine Ferneingabe mit Mitteln der Datenfernverarbeitung oder über ein zentrales übergeordnetes System möglich.

Der mittlere Eingangskanal wird gesteuert von einem Codeleser 306 mit einem zugeordneten mit dem Greiferarm oder dessen Zinken verbundenen Abtaster 307, der eine an der Palette oder an einer Zwischenlage vorgesehene Codierung abliest und über einen Code-Adress-Umsetzer 308 zum Entschlüsseln der aufgefundenen Codierungen und Ausgabe der Adresse der zugeordneten Befehlssequenz im Speicher 301 zuführt. Auf diese Weise wird durch Erfassen der Codierung ein entsprechendes Transportschema selbsttätig ausgewählt und über einen Puffer 309 an einen Block 310 zur Wegoptimierung weitergegeben. Die Steuersignale für zwei Greifer gelangen an einen Block "Wegführung" 311, der die einzelnen Transportbefehle in konkrete Steueranweisungen für die Bewegung der Arme und Greiferteile umsetzt. Ein erster Greifer I und ein zweiter Greifer II sind über entsprechende Ansteuerschaltungen 312 und 313 mit der Wegführung 311 verbunden.

Zur Koordinierung und Sicherung der Greiferbewegungen erfolgt zunächst eine Verriegelung 314, welche ein koninzidierendes Überschneiden der Greiferbewegungen sperrt. Ein in den Bewegungsbereich beim Ausführen eines Transportbefehls eindringender zweiter Greifarm wird gesperrt, bis der erste Greifer den Bereich verlassen hat. Mit dieser Sicherheitssteuerung ist eine einfache Koordinierung der Bewegungen mehrerer Greifer möglich. Um aber auch eine zeitliche Optimierung zu erzielen, ist eine "Vorausschau" günstig, welche künftige Greiferbewegungen einbezieht. Da die Greiferbewegungen jeweils nach einem vorgegebenen Schema ablaufen, werden bei Ausführung eines aktuellen Transportbefehls die nächsten Befehle in der Reihe bereits in den Puffer 309 geladen, der für jeden Greifer ein separates Schieberegister enthält, dessen einzelne Speicherpositionen separat adressier- und veränderbar sind. Es handelt sich also um ein Schieberegister, dessen Eigenschaften über diejenigen kommerziell in integrierter Form erhältlicher entsprechender Register hinausgeht und deshalb in speicherprogrammierter Form realisiert ist.

Unter Berücksichtigung der zu den einzelnen Transportbefehlen gehörigen Verarbeitungszeitinformation, wird die Überschneidung bei künftigen Transportbefehlen errechnet und bei einer festgestellten Überschneidung ein späterer Befehl vorgezogen, bei dem keine Überschneidung stattfindet. Hierzu ist noch eine weitere bei einem Transportbefehl abgespeicherte Zusatzinformation auszuwerten, welche besagt, um wie viele Schritte ein betreffender Transportbefehl maximal vorgezogen werden kann, um ausführbar zu sein. Hierbei können aber auch weitere Bedingungen festgehalten sein, die für die Bearbeitung eine Rolle spielen können. In der Praxis wird bei der Palettierung oder Depalettierung ein Transportbefehl ohne weiteres vorgezogen werden können, der einen Stapel betrifft, der in der gerade abzuarbeitenden Reihe gelegen ist. Bei der koordinierten Ausführung von Transportaufgaben mit zwei oder mehreren Greiferarmen können dabei Aufgaben des einen Armes an den anderen übertragen werden, um im Rahmen der Optimierung auftretende Zeitbegünstigungen des einen oder des anderen Arms ausgleichen zu können. Hierzu werden diejenigen Hilfsinformationen ausgewertet, welche die Zuordnung der Ausführung von Transportbefehlen durch den einen oder den anderen Arm betreffen.

EP 0 377 400 B1

**Patentansprüche**

1. Palettiersystem zum versetzen von stapelbaren Gegenständen mit einer Greifzinken (101, 102) aufweisenden Greifvorrichtung (100) und einer Zwischenlage (200) als Stapelunterlage, wobei die Zwischenlage (200) Erhebungen (201 bis 206) aufweist, zwischen denen Durchlässe vorgesehen sind, die von mindestens einer Kante her zugänglich sind und eine Breite aufweisen, welche mindestens der Zinkenbreite entspricht, sowie eine Höhe, die mindestens der Zinkenhöhe entspricht, wobei der Abstand der Durchlässe auf den Abstand der Zinken (101, 102) abgestimmt ist und die Durchlässe nach oben hin offen ausgebildet sind,
**dadurch gekennzeichnet,**
daß die Greifzinken (101, 102) aufweisende Greifvorrichtung (100) an einem um eine vertikale Achse drehbar angetriebenen Arm (6) angeordnet ist,
daß die stapelbaren Gegenstände Folienstapel (S), insbesondere Druckerzeugnisse, sind und
daß die Zwischenlage (200) als Unterlage für jeweils mehrere in einer Ebene abzulegende Folienstapel (S) dient.

2. Palettiersystem nach Anspruch 1, **dadurch gekennzeichnet,** daß die Erhebungen (201 bis 206) in Form von wellen und/oder Noppen ausgebildet sind.

3. Palettiersystem nach Anspruch 2, **dadurch gekennzeichnet,** daß die noppenförmigen Erhebungen (201 bis 206) in der Ebene der Zwischenlage (200) bezüglich zwei senkrecht aufeinanderstehender Achsenrichtungen in übereinstimmender Abstandsfolge angeordnet sind.

4. Palettiersystem nach Anspruch 3, **dadurch gekennzeichnet,** daß die Wellen an ihrer Unterseite (208) als Zugstreifen ausgebildete Verbindungselemente aufweisen, die jeweils zwei benachbarte Wellentäler miteinander verbinden.

5. Palettiersystem nach Anspruch 1, **dadurch gekennzeichnet,** daß die Anordnung der maximalen Erhebungen an der Oberseite (207) der Zwischenlagen (200) der Anordnung von Ausnehmungen an deren Unterseite entspricht, so daß die Zwischenlagen (200) stapelbar sind.

6. Palettiersystem nach Anspruch 5, **dadurch gekennzeichnet,** daß die Zwischenlagen (200) aus einem Folienmaterial mit im wesentlichen konstanter Dicke besteht.

7. Palettiersystem nach einem der vorangehenden Ansprüche, **dadurch gekennzeichnet,** daß die Zwischenlagen (200) aus einem derart flexiblen Material bestehen, daß sie aufroll- und/oder schneidbar sind.

8. Palettiersystem nach einem der vorangehenden Ansprüche, **dadurch gekennzeichnet,** daß die Oberfläche der Zwischenlagen (200) derart glatt ausgebildet ist, daß diese mittels Sauger transportierbar sind.

9. Palettiersystem nach einem der vorangehenden Ansprüche, **dadurch gekennzeichnet,** daß die Zwischenlage (200) eine Codierung (209) aufweist, die mittels einer am Greifer (100) vorgesehenen Lesevorrichtung (307) abtastbar ist.

10. Palettiersystem nach Anspruch 9, **dadurch** gekennzeichnet, daß die Codierung (209) im Bereich der Kanten der Zwischenlagen (200) angeordnet ist.

11. Palettiersystem nach Anspruch 10, **dadurch gekennzeichnet,** daß ein Speicher (301) vorgegesehen ist, welcher Steuercodes für ein Schema für die Anordnung der stapelbaren Gegenstände auf den Paletten (60) aufweist, wobei Adressiermittel (304) für den Speicher (301) vorgesehen sind und Ausgangssignale der Lesemittel (307) für die Codierung den Adressiermitteln (304) als Eingangssignale zwecks Auswahl der zu einem Schema gehörigen Steuercodes zugeführt werden und die Steuercodes zu den Eingängen der Steuerung (312, 313) für einen Greifer (100) zum Versetzen der stapelbaren Gegenstände gelangen.

**Claims**

1. Palleting system for moving stackable objects, having a gripping device (100) comprising gripping prongs (101, 102) and an intermediate layer (200) as a stack base, the intermediate layer (200) having elevations

8

(201 to 206) between which there are openings which are accessible from at least one edge and the width of which corresponds at least to the width of the prongs, and the height of which corresponds at least to the height of the prongs, the spacing of the openings being matched to the spacing of the prongs (101, 102) and the openings being upwardly open in configuration, characterised in that the gripping device (100) which comprises the gripping prongs (101, 102) is mounted on an arm (6) which is rotatably driven about a vertical spindle, the stackable objects are stacks of films (S), particularly printed products, and the intermediate layer (200) serves as a base for a plurality of film stacks (S) to be deposited in one plane.

2. Palleting system according to claim 1, characterised in that the elevations (201 to 206) are in the form of corrugations and/or bumps.

3. Palleting system according to claim 2, characterised in that the bump-like elevations (201 to 206) are arranged in the plane of the intermediate layer (200) in a matching sequence of spacings with respect to two axial directions arranged perpendicular to one another.

4. Palleting system according to claim 3, characterised in that on their underside (208) the corrugations have connecting members in the form of tension strips which join together two adjacent valleys between the corrugations.

5. Palleting system according to claim 1, characterised in that the arrangement of the maximum elevations on the top (207) of the intermediate layers (200) corresponds to the arrangement of recesses on the bottom, so that the intermediate layers (200) are stackable.

6. Palleting system according to claim 5, characterised in that the intermediate layers (200) consist of a film material of substantially constant thickness.

7. Palleting system according to one of the preceding claims, characterised in that the intermediate layers (200) consist of a material which is sufficiently flexible to be capable of being rolled up and/or cut.

8. Palleting system according to one of the preceding claims, characterised in that the surfaces of the intermediate layers (200) are of sufficiently smooth construction to allow them to be transported by suction means.

9. Palleting system according to one of the preceding claims, characterised in that the intermediate layer (200) has a code (209) which can be scanned by means of a scanner device (307) provided on the gripper (100).

10. Palleting device according to claim 9, characterised in that the code (209) is provided in the region of the edges of the intermediate layers (200).

11. Palleting system according to claim 10, characterised in that a memory (301) is provided which has control codes for a plan for arranging the stackable objects on the pallet (60), addressing means (304) for the memory (301) being provided and output signals from the scanning means (307) for coding being sent to the addressing means (304) as input signals for selecting the control codes belonging to a plan, the control codes reaching the inputs of the control means (312, 313) for a gripper (100) in order to move the stackable objects.

## Revendications

1. Système de palettisation pour déplacer des objets empilables, comprenant un dispositif de préhension (100) présentant des dents de préhension (101, 102), ainsi qu'un intercalaire (200) servant de support de piles, l'intercalaire (200) présentant des surélévations (201 à 206) entre lesquelles sont prévus des passages accessibles d'au moins un côté et ayant une largeur correspondant au moins à la largeur des dents, de même qu'une hauteur correspondant au moins à la hauteur des dents, l'espacement des passages étant adapté à l'espacement des dents (101, 102) et les passages s'ouvrant vers le haut, caractérisé en ce que le dispositif de préhension (100), présentant les dents de préhension (101, 102), est disposé sur un bras (6) pouvant être entraîné en rotation autour d'un axe vertical,

que les objets empilables sont des piles de feuilles (S), en particulier d'imprimés, et

que l'intercalaire (2) sert de support pour chaque fois plusieurs piles de feuilles (S) à déposer dans un plan.

2. Système de palettisation selon la revendication 1, caractérisé en ce que les surélévations (201 à 206) sont réalisées sous la forme d'ondulations et/ou de boutons.

3. Système de palettisation selon la revendication 2, caractérisé en ce que les surélévations en forme de boutons (201 à 206) sont agencées à intervalles concordants suivant deux axes orthogonaux dans le plan de l'intercalaire (2).

4. Système de palettisation selon la revendication 3, caractérisé en ce que les ondulations présentent, sur leur côté inférieur (208), des éléments de liaison réalisés comme des bandes de tirage et qui relient chacun deux creux d'onde voisins.

5. Système de palettisation selon la revendication 1, caractérisé en ce que l'agencement des surélévations maximales sur le dessus (207) des intercalaires (200) correspond à l'agencement d'évidements sur leur dessous, de sorte que les intercalaires (200) soient empilables.

6. Système de palettisation selon la revendication 5, caractérisé en ce que les intercalaires (200) sont réalisés d'un matériau en feuille ayant une épaisseur sensiblement constante.

7. Système de palettisation selon une des revendications précédentes, caractérisé en ce que les intercalaires (200) sont formés d'un matériau ayant une souplesse telle que les intercalaires sont susceptibles d'être enroulés et/ou découpés.

8. Système de palettisation selon une des revendications précédentes, caractérisé en ce que la surface des intercalaires (200) est si lisse que les intercalaires sont transportables au moyen de suceurs.

9. Système de palettisation selon une des revendications précédentes, caractérisé en ce que l'intercalaire (200) porte un code (209) pouvant être lu par un dispositif de lecture (307) prévu sur le dispositif de préhension ou grappin (100).

10. Système de palettisation selon la revendication 9, caractérisé en ce que le code (209) est apposé dans la région des bords des intercalaires (200).

11. Système de palettisation selon la revendication 10, caractérisé en ce qu'il comprend une mémoire (301) qui présente des codes de commande pour un schéma de disposition des objets empilables sur les palettes (60), des moyens d'adressage (304) étant prévus pour la mémoire (301), des signaux de sortie des moyens de lecture (307) pour le code étant envoyés en tant que signaux d'entrée aux moyens d'adressage (304) en vue de la sélection d'un code de commande associé à un schéma et les codes de commande étant appliqués aux entrées de la commande (312, 313) pour un grappin (100) en vue du déplacement des objets empilables.

Fig.1a

Fig.1a

9 25

X Verfahrstrecke = 0-5000mm

13
4  1  5
7
14

19
17
20
10
18
Y=400°  8  6  22  21
24  23
Z=500°
103
2
41
S  S  100
S
101, 102
3

62 65  S  64 60 S S  66  61
Automatischer
Hubtisch

63

40

EP 0 377 400 B1

Fig. 1b

Position
Geb.-Zuführung
variabel

40

S    26

41    25

12

11    1

12

15    13

14    16

4

5

↻ 400°

9

7    8

6

22    18

10    ↻ 500°

21

23

S

61

EP 0 377 400 B1

27

Fig.2

Fig. 3a

Fig. 3b

103

S

B    B

207
200
208

101    102

201    202    203

200

209    101    204    209    205    209    102    206

A    A

EP 0 377 400 B1

14

Fig. 4b

Fig. 4a

Fig.5

EP 0 377 400 B1